# EUROPEAN PATENT SPECIFICATION

(11) **EP 4 482 625 B1**
(45) Date of publication and mention of the grant of the patent: **04.03.2026**
(21) Application number: 22835745.5
(22) Date of filing: 13.12.2022
(51) Int. Cl.: B05B 1/14

(54) **SPRINKLER SYSTEM**
SPRINKLERANLAGE
SYSTÈME D'ARROSEUR

(30) Priority: 21.02.2022 EP 22157791
(43) Date of publication of application: 01.01.2025
(73) Proprietor: Husqvarna AB, 561 82 Huskvarna (SE)
(72) Inventor: SCHENK, Christoph, 89610 Oberdischingen (DE)
(74) Representative: Finkele, Rolf
(86) International application number: PCT/EP2022/085596
(87) International publication number: WO 2023/156042

(56) References cited:
- CN-U- 205 041 229
- GB-A- 2 560 591
- US-A- 5 240 184
- US-A1- 2006 273 192
- US-B1- 10 081 024

## Description

### TECHNICAL FIELD

The present disclosure relates to a sprinkler system. More specifically, the present disclosure relates to the sprinkler system which allows improved and customizable liquid distribution.

### BACKGROUND

A sprinkler system (more specifically, an irrigational sprinkler) is a device which may be used to irrigate agricultural crops, lawns, landscapes, golf courses, and other areas. The sprinkler system may additionally be used for controlling airborne dust. The irrigational sprinkler system often involves a method of applying a liquid (say water) in a controlled manner in a way similar to rainfall.

However, there may be instances in which working with the sprinkling system may involve undesired overlaps, range constraints and other implementation challenges. Such challenges may be more pronounced for applications involving complex landscape shapes. This may cause excess liquid to be deposited in the areas where there is sprinkling overlap, thereby resulting in a substantial wastage of the liquid, waterlogging etc. Hence, an improved sprinkler system may be desired which may include a plurality of nozzles with different flow characteristics to overcome above mentioned deficiencies or drawbacks.

An example of a sprinkling system is provided in United States patent 9,662,668 (hereinafter referred to as '668 reference). The '668 reference provides an irrigation sprinkler that includes a riser and a nozzle mounted at an upper end of the riser for rotation. The sprinkler includes a high flow rate port and a low flow rate port that emits a stream of water. The sprinkler further includes a diverter valve that intermittently blocks or permits the flow of water to the high flow rate port or to the low flow rate port as the nozzle rotates. However, there is still a need for a better sprinkler system design that may overcome the problems such as undesired overlaps, range constraints, and the like without needing to block the flow of the liquid from any of the plurality of nozzles in the sprinkler system.

A further example of an irrigation sprinkler is provided in US patent application US 2006/0273192 A1 (hereinafter referred to as '192 reference). The irrigation sprinkler comprises a sprinkler nozzle having an outlet and an inlet in which a restrictor plate is mounted, wherein a chamber is delimited by the restrictor plate in front of the nozzle outlet. The nozzle outlet is a pair of spaced outlet orifices that combine to form the cross-sectional area of the outlet. The restrictor plate is a structure within the fluid flow path to control the fluid flow rate and pressure prior to the nozzle outlet. Additionally, the nozzle is configured to generate a consistent fluid stream regardless of the fluid pressure within a conduit of the irrigation sprinkler. That is the restrictor plate and the chamber allow the nozzle to have a substantially consistent fluid pressure, flow rate, and exit velocity at the nozzle outlet so that the stream throw distance is generally a consistent distance even if the fluid pressure in the conduit varies. Therefore, the '192 reference discloses the restrictor plate which equalizes the fluid flow prior to the nozzle outlet. Hence, the throw distance is equal for all of the outlet openings. However, the '192 reference does not disclose a barrier which at the same time at least partially limits the flow of liquid towards the at least one second nozzle, and does not interfere with the liquid towards the first nozzle. Hence, an improved sprinkler system may be desired which may include a plurality of nozzles with different flow characteristics to overcome above mentioned deficiency or drawback. US5240184 relates to a simple and cost-effective spreader nozzle for irrigation sprinklers that produces a low-pressure, small-droplet spray by directing water through a tortuous, turbulence-inducing pathway, thereby improving close-in watering performance while reducing sensitivity to wind and evaporation.

### SUMMARY

In view of the above, it is an objective of the present invention to solve or at least reduce the drawbacks discussed above. The objective is at least partially achieved by a sprinkler system. The sprinkler system includes a body defining a liquid channel. The liquid channel is defined between an inlet and an outlet of the body to allow flow of a liquid. A sprinkler head is coupled to the body and a plurality of nozzles are disposed with the sprinkler head. The plurality of nozzles defines a first nozzle and at least one second nozzle. The sprinkler system is characterized in that the body further defines at least one barrier such that the at least one barrier at least partially limits the flow of liquid from the outlet towards the at least one second nozzle, and such that the flow of the liquid flowing out of the at least one second nozzle varies in flow characteristics relative to the liquid flowing out of the first nozzle.

Thus, the sprinkler system of the present disclosure advantageously includes at least one barrier such that the at least one barrier decreases the pressure of the liquid flowing towards the at least one second nozzle. Further, the at least one barrier also reduces the flow rate of the liquid flowing towards the at least one second nozzle. The flow of the liquid flowing out of the at least second nozzle thus varies in flow characteristics (say the flow rate, flow pressure, flow range etc.) relative to the liquid flowing out of the first nozzle. Therefore, the sprinkler system of the present disclosure advantageously provides customized flow patterns, ranges etc.as per application requirements.

According to an embodiment of the present disclosure, the at least one barrier includes at least one first barrier and at least one second barrier. The at least one first barrier is cylindrical in shape and at least one second barrier is arc-like in shape. The at least one first barrier and at least one second barrier have different shapes and sizes to provide customized flow patterns.

According to an embodiment of the present disclosure, the liquid channel is defined along an axis. A lateral distance of the at least one protrusion from the axis of the liquid channel is greater than a lateral distance of the at least one second nozzle from the axis of the liquid channel. Thus, the at least one protrusion is positioned in the body of the sprinkler system in a manner such that the at least one protrusion interferes with the flow of the liquid flowing towards the at least one second nozzle.

According to an embodiment of the present disclosure, the lateral distance of the at least one protrusion from the axis of the liquid channel is less than a lateral distance of the first nozzle from the axis of the liquid channel. Thus, the at least one protrusion is positioned in the body of the sprinkler system in a manner such that the at least one protrusion does not interfere with the flow of the liquid flowing towards the first nozzle.

According to an embodiment of the present disclosure, the outlet is offset from the axis of the liquid channel by a distance equal to or more than the lateral distance of the first nozzle from the axis of the liquid channel. The outlet is advantageously defined in a manner such that the liquid from the outlet needs to travel different distances to flow out from the first nozzle and the at least one second nozzle. Thus, the flow of the liquid flowing out from the first nozzle and the at least one second nozzle varies in the flow characteristics such as the flow pressure.

According to an embodiment of the present disclosure, an angle of the plurality of nozzles is adjustable with respect to the sprinkler head. The angle adjustment of the nozzles may improve or alter the sprinkling range, trajectory, or distances of the liquid stream on the irrigation field. Thus, more area on the irrigation field may be covered.

According to an embodiment of the present disclosure, the plurality of nozzles may have similar cross-sections. Further, in some embodiments of the present disclosure, the plurality of nozzles may have different cross-sections. The cross-section of the plurality of the nozzles may be different to provide different liquid streams having different profiles, ranges, and the like.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a side perspective view of a sprinkler system, in accordance with an aspect of the present disclosure;
**FIG. 2** illustrates a partial cut-away side perspective view of a sprinkler system of **FIG. 1** along an axis A-A', in accordance with an aspect of the present disclosure;
**FIG. 3** illustrates a partial cut-away side perspective view of a sprinkler system of **FIG. 1** along an axis A-A' with one first barrier and one second barrier, in accordance with an aspect of the present disclosure;
**FIG. 4** illustrates a partial cut-away side perspective view of a sprinkler system of **FIG. 1** along an axis A-A' with one first barrier and three second barriers, in accordance with an aspect of the present disclosure;
**FIG. 5** illustrates a partial cut-away top perspective view of a sprinkler system of **FIG. 1** along an axis A-A', in accordance with an aspect of the present disclosure;
**FIG. 6** illustrates a perspective view of a sprinkler system, in accordance with an aspect of the present disclosure; and
**FIG. 7** illustrates a sprinkler system for liquid trajectories at different distances, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

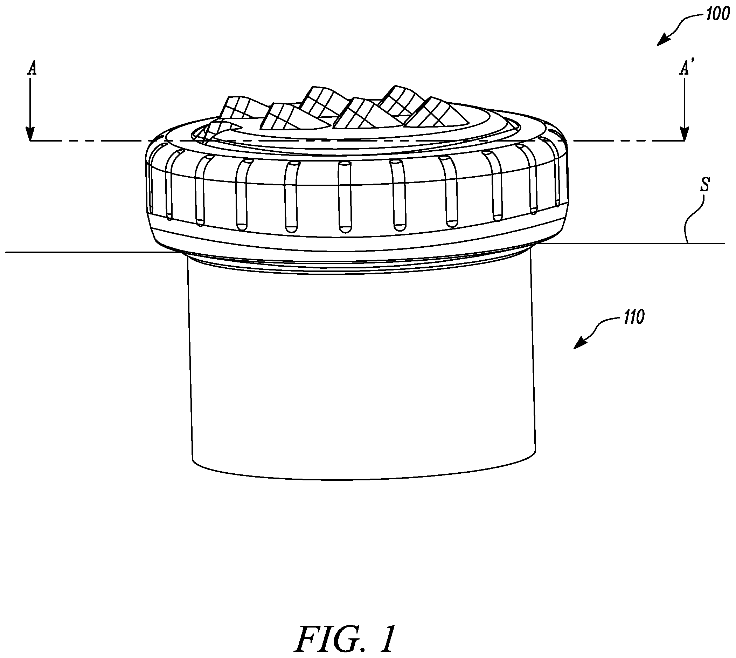

**FIG. 1** illustrates a sprinkler system **100.** The sprinkler system **100** of the present disclosure may be any device which finds application in outdoor (such as gardens, lawns, and the like) or indoor installations to supply or spray liquid in a controlled manner as per the requirement of the installations. The present disclosure may be implemented with any sprinkling system having a plurality of nozzles, such as with a sprinkler head and like arrangement, to sprinkle liquid in accordance with different factors such as sprinkling range, area, profile, among any other user preferences. In some embodiments, the sprinkler system **100** may be designed for use as an in-ground sprinkler. The sprinkling system **100** may be fixed to a ground surface "S". In some embodiments, the sprinkling system **100** may also be used for above-ground surface "S" liquid operations. The liquid may be water, or any other liquid finding applications as would be obvious to a person having knowledge in the art. The present disclosure exemplary refers to water as the liquid, without any limitation, as it finds vast application in sprinkling of lawns, gardens, and the like.

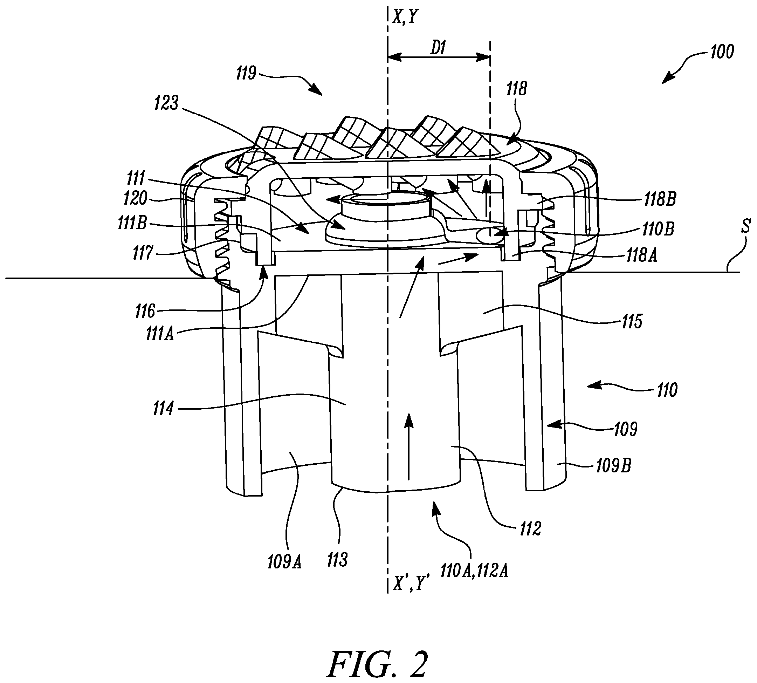

The sprinkler system **100,** as illustrated in **FIG. 2****,** includes a body **110** along a central axis **Y-Y'**. The body **110** includes a side surface **109** and a top surface **111.** The side surface **109** includes an inner wall **109A** and an outer wall **109B** such that the inner wall **109A** faces opposite to the outer wall **109B.** Similarly, the top surface **111** includes an inner wall **111A** and an outer wall **111B** such that the inner wall **111A** faces opposite to the outer wall **111B.** The top surface **111** further defines a channel (not shown) between the inner wall **111A** and the outer wall **111B.**

The body **110** further defines a liquid channel **112** along an axis **X-X'.** The axis **X-X'** in the present disclosure coincides with the central axis **Y-Y'**. In some embodiments, the axis **X-X'** may be parallel to the central axis **Y-Y'** but may not coincide with the central axis **Y-Y'**. In some embodiments, the axis **X-X'** may be at an angle with the central axis **Y-Y'**. The angle may preferably vary from 0 degrees to 45 degrees. However, the present disclosure may account for other angles outside the preferred range without limiting the scope of the present disclosure in any manner.

The liquid channel **112** of the present disclosure mimics the shape of the commonly known and available cylindrical hoses. The liquid channel **112** of the present disclosure has a cylindrical cross-section. However, the liquid channel **112** may have any shape or cross-section that may allow flow of the liquid without limiting the scope of the present disclosure in any manner.

The liquid channel **112** includes an inlet **112A** at a bottom end **113.** Further, the liquid channel **112** includes an outlet (not shown) at a top end (not shown). Furthermore, the liquid channel **112** defines a side wall **114** between the top end and the bottom end **113** of the liquid channel. The liquid channel **112** or the side is coupled to the inner wall **109A** of the body **110** by means of an annular bracket **115.** The coupling between the side wall **114** and the annular bracket **115** and further between the annular bracket **115** and the inner wall **109A** may be implemented by any means known and understood in the art. Further, the top end of the liquid channel **112** is fluidly coupled to the channel defined between the inner wall **111A** and the outer wall **111B** by any means known in the art without limiting the scope of the present disclosure in any manner.

With continued reference to **FIG. 2****,** the liquid channel **112** is defined between an inlet **110A** and an outlet **110B** of the body **110** to allow flow of the liquid. For the purpose of the present disclosure, the inlet **110A** of the body **110** coincides with the inlet **112A** of the liquid channel **112.** However, in actual implementation, the inlet **110A** may be different from the inlet **112A.** The inlets **110A, 112A** may preferably have a circular shape. However, any other shape of the inlets **110A, 112A** is within the scope of the present disclosure.

Further, the outlet **110B** may coincide with the outlet of the liquid channel **112.** However, for the purpose of the purpose of the present disclosure, the outlet **110B** is at a lateral distance "D1" from the outlet of the liquid channel **112.** The outlet **110B** is at a lateral distance "D1" from the axis **X-X'.** The outlet **110B** is at a lateral distance "D1" from the axis **Y-Y'**. The lateral distance "D1" is between the center of the outlet **110B** and any of the axis **X-X'** or **Y-Y'**.

The outlet **110B** is fluidly coupled to the outlet of the liquid channel **112** preferably via the channel defined between the inner wall **111A** and the outer wall **111B.** In some embodiments, the outlet **110B** may be fluidly coupled to the outlet of the liquid channel **112** via a hose (not shown) by any means known in the art. However, in actual implementation of the present disclosure, the outlet **110B** may be fluidly coupled to the outlet of the liquid channel **112** by any means without limiting the scope of the present disclosure.

Further, the outer wall **111B** that defines the outlet **110B,** furthermore defines an annular recess **116** and an annular step portion **117.** The annular step portion **117** may be thought of as an annular stairs like portion. The annular recess **116** and the annular step portion **117** provides an engagement portion for a sprinkler head **118.**

The sprinkler head **118** is coupled to the body **110** by virtue of secure engagement between an annular leg portion **118A** of the sprinkler head **118** and the annular recess **116** and further between an annular protrusion **118B** of the sprinkler head **118** and the annular step portion **117** by friction-fitting or any other coupling means commonly implemented in the related art. The engagement between the sprinkler head **118** and the body **110** is housed within a housing **120.** The housing **120** is threadedly coupled to the body **110.** Further a portion of the housing **120** is coupled to the annular protrusion **118B** of the sprinkler head **118.** The housing **120** may advantageously protect the coupling between the sprinkler head **118** and the body **110.** The housing **120** may prevent the disengagement between the sprinkler head **118** and the body **110** due to external factors such as an inadvertent force released by an operator, environmental factors among others. The housing **120** may further add value to aesthetics of the sprinkler head **118** or the sprinkler system **100** as a whole. The housing **120** may further provide a gripping surface for the operator such that the operator may grip the housing **120** while embedding the sprinkler system **100** in the ground surface "S".

In some embodiments, the sprinkling system **100** may include a drive mechanism (not shown) which may drive the rotation of the sprinkler head **118** about the central axis **Y-Y'** or the axis **X-X'** relative to the ground surface "S". This may allow the sprinkler system **100** to produce different sprinkling profiles such as concentric sprinkling rings as the sprinkler head **118** is rotated about the central axis **Y-Y'** or the axis **X-X'** along which the liquid channel **112** is defined. The drive mechanism may include a motor (not shown), such as an electric motor e.g., stepper motor, or a motor with an encoder or a hydraulic motor that drives the rotation of the sprinkler head **118** relative to the ground surface "S".

In some embodiments, the sprinkler head **120** may be manufactured by three-dimensional printing (also known as additive manufacturing or 3D printing). Use of three-dimensional printing (alternatively, 3D printing) provides versatility of using different materials along with low lead-time in manufacturing and design of the sprinkler head **118.**

Further with continued reference to **FIG. 2****,** a plurality of nozzles **119** are disposed with the sprinkler head **118.** The liquid from an external liquid source (not shown) reaches the inlet **110A** or the inlet **112A** via an external hose (not shown). The liquid enters the liquid channel **112** via the inlet **110A** or the inlet **112A** and flows through the liquid channel **112** towards the outlet of the liquid channel **112.** Further, the liquid from the outlet of the liquid channel **112** flows towards the outlet **110B** such that the liquid from the outlet **110B** flows towards the plurality of nozzles **119** and finally gets sprinkled out from the sprinkler head **118** for further applications such as, but not limited to, irrigation of the ground surface "S".

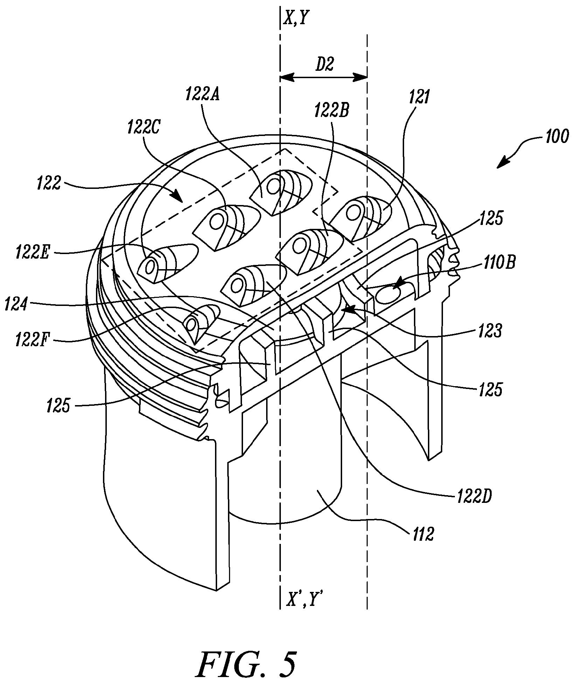

Further with reference to **FIGS. 2** and **5****,** the body **110** defines at least one barrier **123** such that the at least one barrier **123** at least partially limits the flow of liquid from the outlet **110B** towards at least one second nozzle **122.** The at least one barrier **123** interferes with the flow of liquid from the outlet **110B** towards the at least one second nozzle **122** to vary the flow characteristics of the liquid. In some embodiments, the at least one barrier **123** may limit the amount of the liquid travelling towards the at least one second nozzle **122.** In some embodiments, the at least one barrier **123** may completely block the flow of liquid towards the at least one second nozzle **122.** In some embodiments, the liquid flowing towards the at least one second nozzle **122** may lose energy on collision with the at least one barrier **123.** In some embodiments, the liquid flowing towards the at least one second nozzle **122** may lose pressure on collision with the at least one barrier **123.** In some embodiments, the at least one barrier **123** may alter the flow rate from the at least one second nozzle **122.** In some embodiments, the at least one barrier **123** may alter the flow range from the at least one second nozzle **122.** Thus, the at least one barrier **123** may alter one or the other flow characteristics of the liquid flowing towards the at least one second nozzle **122.**

In some embodiments, as illustrated in **FIG. 2****,** the at least one barrier **123** is coupled to the outer wall **111B** of the top surface **111** of the body **110.** The coupling between the at least one barrier **123** and the outer wall **111B** is operatively implemented by means of a plurality of brackets **(not shown).** However, the coupling between the at least one barrier **123** and the outer wall **111B** may be implemented by any means known and understood in the related art without limiting the scope of the present disclosure in any manner. The at least one barrier **123** is coupled to the outer wall **111B** of the top surface **111** in a manner such that a center of the at least one barrier **123** coincides with the axis **X-X'** of the liquid channel **112.** The at least one barrier **123** is coupled to the outer wall **111B** of the top surface **111** in a manner such that a center of the at least one barrier **123** coincides with the central axis **Y-Y'**. The at least one barrier **123** is coupled to the body **110** along the central axis **Y-Y'**. The at least one barrier **123** is coupled to the body **110** between the top surface **111** of the body **110** and the sprinkler head **118.** The at least one barrier **123** is coupled to the body **110** between the top surface **111** of the body **110** and the plurality of nozzles **119.**

However, in actual implementation of the present disclosure, the at least one barrier **123** may be at some lateral distance from the central axis **Y-Y'**. The at least one barrier **123** may be coupled to the top surface **111** of the body **110** at some lateral distance from the axis **X-X'** of the liquid channel **112** such that the lateral distance of the at least one barrier **123** from the axis **X-X'** of the liquid channel **112** is greater than the lateral distance of the at least one second nozzle **122** from the axis **X-X'** of the liquid channel **112.** Thus, the at least one barrier **123** may be positioned in the body **110** of the sprinkler system **100** in the manner such that the at least one barrier **123** may interfere with the flow of the liquid flowing towards the at least one second nozzle **122.** Similarly, the lateral distance of the at least one barrier **123** from the axis **X-X'** of the liquid channel **112** may be less than a lateral distance "D2" of a first nozzle **121** from the axis **X-X'** of the liquid channel **112** (as shown in **FIG. 5** ) such that the at least one barrier **123** may be positioned in the body **110** of the sprinkler system **100** in the manner such that the at least one barrier **123** may not interfere with the flow of the liquid flowing towards the first nozzle **121.**

In some embodiments, the at least one barrier **123** may be one barrier as illustrated in **FIG. 2****.** However, in actual implementation, the at least one barrier **123** may be plurality of barriers as per the application requirement, space constraints, among other factors.

In some embodiments, the at least one barrier **123** as illustrated in **FIG. 2** is cylindrical in shape. In some embodiments, the at least one barrier **123** may be cubical in shape. In some embodiments, the at least one barrier **123** may be conical in shape. However, in actual implementation of the present disclosure, the at least one barrier **123** may have any shape and size as per the application requirements.

In some embodiments, the at least one barrier **123** may be removably coupled with the top surface **111** of the body **110.** The at least one barrier **123** may be removably coupled for easy maintenance, among other factors. In some embodiments, the at least one barrier **123** may be fixedly coupled with the top surface **111** of the body **110.** The at least one barrier **123** may be formed in one-piece with the body **110** by any known manufacturing means. In some embodiments, the at least one barrier **123** may be pivotably coupled with the top surface **111** of the body **110.**

In some embodiments, the at least one barrier **123** may be telescopic. The height of the at least one barrier **123** may be varied as per the application requirement by any mechanical or electronic means known and understood in the related art.

In some embodiments, the at least one barrier **123** may be a solid body. In some embodiments, the at least one barrier **123** may be rotatable such that the liquid flowing around the at least one barrier **123** may exhibit a rotating or a swirling motion. In some embodiments, the at least one barrier **123** may be a vibrating body.

In some embodiments, the at least one barrier **123** may be a hollow body. The hollow body may include one or more functional elements such that in some embodiments, the at least one barrier **123** may manipulate the temperature of the liquid flowing around the at least one barrier **123.** In some embodiments, the at least one barrier **123** may spray fertilizer to the liquid flowing around the at least one barrier **123.**

In some embodiments, the at least one barrier **123** may be an open container such that the container may contain a plurality of swellable balls. The swellable balls may enlarge upon absorption of liquid and interfere with the flow of the liquid. The swellable balls may be formed from hydrophilic materials.

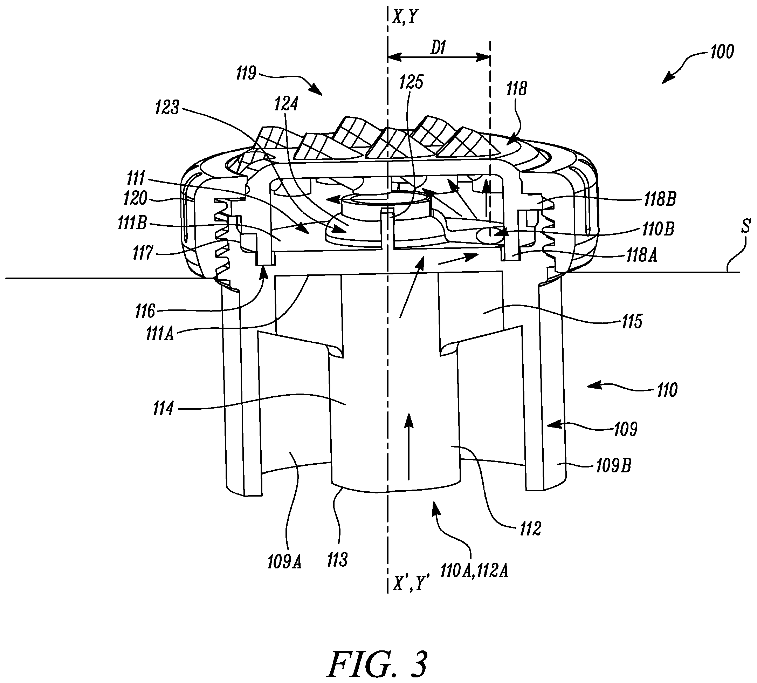

In some embodiments, the at least one barrier **123** may be a streamlined body that may reduce the frictional drag between the molecules or the particles of the liquid. In some embodiments, as illustrated in **FIG. 3****,** at least one barrier **123** includes at least one first barrier **124** and at least one second barrier **125.** The at least one first barrier **124** in conjunction with the at least one second barrier **125** at least partially limits the flow of liquid from the outlet **110B** towards at least one second nozzle **122.** The at least one first barrier **124** and the at least one second barrier **125** interfere with the flow of liquid from the outlet **110B** towards the at least one second nozzle **122** to vary the flow characteristics of the liquid.

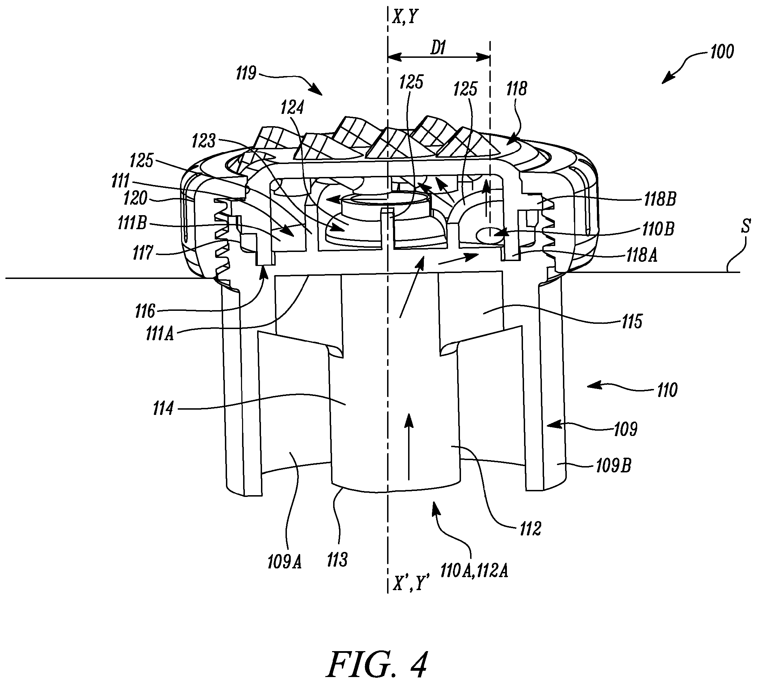

The at least one first barrier **124** and the at least one second barrier **125** as illustrated in **FIG. 3** is one first barrier **124** and one second barrier **125..** In some embodiments as illustrated in **FIG. 4****,** the at least one first barrier **124** is one first barrier **124** and the at least one second barrier **125** are three second barriers **125.** However, in the actual implementation of the present disclosure, the at least one first barrier **124** and the at least one second barrier **125** may be any number of barriers depending on the application requirement among other factors.

Further, as illustrated in **FIG. 4****,** the one first barrier **124** has a cylindrical shape and the three second barriers **125** have a sector like or arc like shape. The arcs may be such that they have a common center at the outlet **110B.** Thus, the arcs may be concentric. However, in actual implementation of the present disclosure, the one first barrier**124** and the three second barrier **125** may have any shape, size, position with respect to the outlet **110B** depending on the application requirement. Further, the three second barriers **125** may vary in size relative to one another such that the second barrier **125** closer to the outlet **110B** is smallest whereas the second barrier **125**farthest from the outlet **110B** is largest. The second barrier **125**closer to the outlet **110B** poses bare minimum restriction in the liquid flow, whereas the second barrier **125**farthest from the outlet **110B** poses maximum restriction in the liquid flow.

In some embodiments, the at least one first barrier **124** and the at least one second barrier **125** may be telescopic. The height of the at least one first barrier **124** and the at least one second barrier **125** may be varied as per the application requirement by any mechanical or electronic means known and understood in the related art.

Further, it should be contemplated that the at least one barrier 123 may either include only the first barrier 124, or only the second barrier 125, or a combination of the first barrier 124 and the second barrier 125 in terms of parameters such as, but not limited to, number, placement, shapes, sized etc. The present disclosure envisions to include all such combinations in any manner within the scope of the present disclosure.

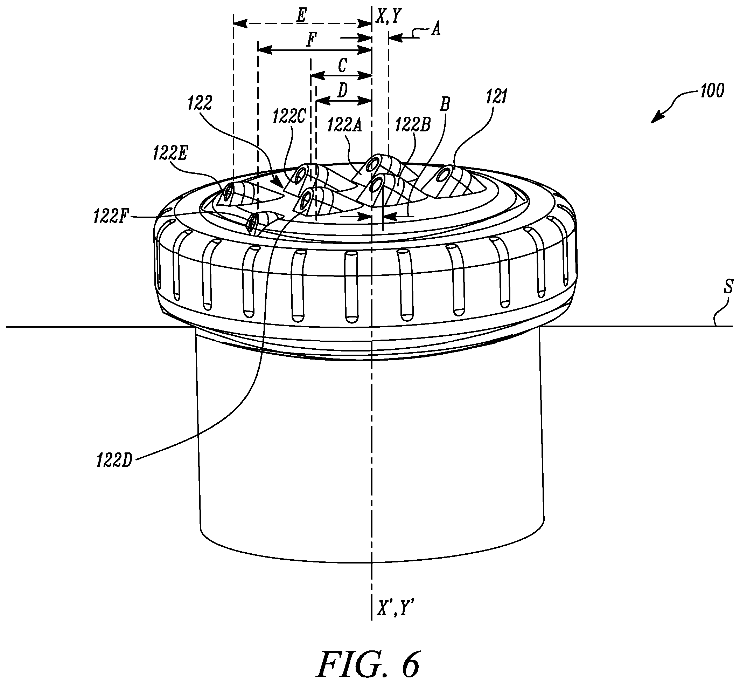

The plurality of nozzles **119** of any of the **FIGS. 2-4** are illustrated in detail in **FIGS. 5** and **6****.** The plurality of nozzles **119** defines the first nozzle **121** and the at least one second nozzle **122.** The first nozzle **121** is at a lateral distance "D2" from the from the outlet of the liquid channel **112.** The first nozzle **121** is at a lateral distance "D2" from the axis **X-X'.** The first nozzle **121** is at a lateral distance "D2" from the axis **Y-Y'**. The lateral distance "D2" is between the center of the first nozzle **121** and any of the axis **X-X'** or **Y-Y'**. The center of the first nozzle **121** or any other nozzle from the plurality of nozzles **119** is the point around which a hole may be formed to receive the liquid from the outlet **110B** of the body **110.**

Further, the at least one second nozzle **122** as illustrated in **FIGS. 5** and **6** may be any number of nozzles depending upon the application requirement, sprinkler head surface area, among other factors. However, for the implementation of the present disclosure, the at least one second nozzle **122** are six nozzles, **122A, 122B, 122C, 122D, 122E** and **122F.** The six nozzles **122A, 122B, 122C, 122D, 122E** and **122F** are at a lateral distance "A, B, C, D, E and F" respectively from the from the outlet of the liquid channel **112.** The six nozzles **122A, 122B, 122C, 122D, 122E** and **122F** are at a lateral distance "A, B, C, D, E and F" respectively from the axis **X-X'.** The six nozzles **122A, 122B, 122C, 122D, 122E** and **122F** are at a lateral distance "A, B, C, D, E and F" respectively from the axis **Y-Y'**. The lateral distance "A, B, C, D, E and F" is respectively between the center of the six nozzles **122A, 122B, 122C, 122D, 122E** and **122F** and any of the axis **X-X'** or **Y-Y'.**

The outlet **110B** and the plurality of nozzles **119** are thus at varying lateral distances "D1, D2, A, B, C, D, E and F" from any of the axis **X-X'** or **Y-Y'**. The outlet **110B** is offset from the axis **X-X'** of the liquid channel **112** or the central axis **Y-Y'** by the distance "D1" equal to or more than the lateral distance "D2" of the first nozzle **121** from the axis **X-X'** of the liquid channel **112** or the central axis **Y-Y'** of the body **110** of the sprinkler system **100.** The outlet **110B** is advantageously defined in a manner such that the liquid from the outlet **110B** needs to travel different distances to flow out from the first nozzle **121** and the at least one second nozzle **122.**

As seen and interpretated from **FIGS. 4****,** **5** and **6****,** the distance between the outlet **110B** and the first nozzle **121** is minimum and the distance between the outlet **110B** and the nozzle **122F** is maximum. The distance between the outlet **110B** and the first nozzle **121** may be exemplified as **110B-121** for the purpose of understanding of the present disclosure and the distance between the outlet **110B** and the remaining nozzles of the plurality of nozzles **119** may be exemplified in the same manner. Thus, **110B-121** < **110B-122A** < **110B-122B < 110B-122C < 110B-122D < 110B-122E < 110B-122F.** The liquid particles heading from the outlet **110B** towards the nozzle **122F** are required to travel more distance compared to the liquid particles heading from the outlet **110B** towards other nozzles from the plurality of nozzles **119.** Thus, the liquid particles heading towards the nozzle **122F** may lose substantial energy on the way. The liquid particles heading towards the nozzle **122F** may have comparatively less energy upon reaching **122F.**

In a similar manner, the liquid particles heading from the outlet **110B** towards the first nozzle **121** are required to travel significantly less distance compared to the liquid particles heading from the outlet **110B** towards other nozzles from the plurality of nozzles **119.** Thus, the liquid particles heading towards the first nozzle **121** may not lose any substantial energy on the way. The liquid particles heading towards the first nozzle **121** may have comparatively more energy upon reaching the first nozzle **121.** Similar concept may be applied for understanding the energy levels of the liquid particles heading towards any other nozzles of the plurality of nozzles **119** too. In a simplified manner, it may be inferred that the greater the distance the liquid (or the liquid particles) need to travel, the lesser the energy they may possess for the irrigation application or any other applications. Thus, the flow of the liquid out from the first nozzle **121** and the at least one second nozzle **122** varies in the flow characteristics such as the flow pressure.

With continued reference to **FIGS. 4****,** **5** and **6****,** the working of the sprinkler system **100** with the at least one barrier **123** may be understood. The liquid from the external liquid source (not shown) reaches the inlet **110A** or the inlet **112A** via an external hose (not shown). The liquid enters the liquid channel **112** via the inlet **110A** or the inlet **112A** and flows through the liquid channel **112** towards the outlet of the liquid channel **112.** Further, the liquid from the outlet of the liquid channel **112** flows towards the outlet **110B** such that the liquid from the outlet **110B** flows towards the plurality of nozzles **119.**

The flow of the liquid between the outlet **110B** and the plurality of nozzles **119** is affected by the distance between the outlet **110B** and the plurality of nozzles **119.** Further, the flow of the liquid between the outlet **110B** and the plurality of nozzles **119** is affected by the positioning of the at least one barrier **123** between the outlet **110B** and the plurality of nozzles **119.**

The flow of the liquid between the outlet **110B** and the first nozzle **121** is not affected by the at least one barrier **123.** Further, the distance between the outlet **110B** and the first nozzle **121** is comparatively less when seen in comparison to the distance between the outlet **110B** and the plurality of nozzles **119.** Thus, there is no substantial energy loss as well for the liquid flowing from the outlet **110B** towards the first nozzle **121.** The first nozzle **121** may provide liquid flow with high flow rate and the widest throw range or flow range. The throw range is the distance travelled by the sprinkled liquid with respect to the central axis **Y-Y'**.

The flow of the liquid between the outlet **110B** and the nozzle **122A** is partly affected by the at least one barrier **123.** Further, the distance between the outlet **110B** and the nozzle **122A** is comparatively less when seen in comparison to the distance between the outlet **110B** and the nozzles **122A, 122B, 122C, 122D, 122E** and **122F** and just slightly greater when seen in comparison to the first nozzle **121.** Thus, there is no substantial energy loss as well for the liquid flowing from the outlet **110B** towards the nozzle **122A.** The nozzle **122A** may provide liquid flow with high flow rate and the widest throw range or flow range almost similar to the first nozzle **121.**

The effect of the at least one barrier **123** is more on the nozzles **122B, 122C, 122D, 122E** and **122F.** The flow between the outlet **110B** and the nozzles **122B, 122C, 122D, 122E** and **122F** is substantially affected by the at least one barrier **123** . The liquid reaching the nozzles **122B, 122C, 122D, 122E** and **122F** gets partly deviated, blocked, loses kinetic energy etc., due to the collision with the at least one barrier **123.** The affect is such that the nozzle **122F** which is farthest from the outlet **110B** provides liquid flow with lowest flow rate and the narrow throw range or flow range due to loss of energy and pressure. The loss in pressure is due to comparatively more distance travelled in comparison to the remaining plurality of nozzles **119** and comparatively more exposure to the interference of the at least one barrier **123.** Thus, the flow rate and the throw range for the nozzle **121** > nozzle **122A** > nozzle **122B** > nozzle **122C** > nozzle **122D** > nozzle **122E** > nozzle **122F.** Hence, different flow characteristics are achieved from the plurality of nozzles **119** in the single sprinkler head **118.** The liquid from the plurality of nozzles **119** is finally sprinkled or sprayed for various applications, such as, but not limited to, irrigation.

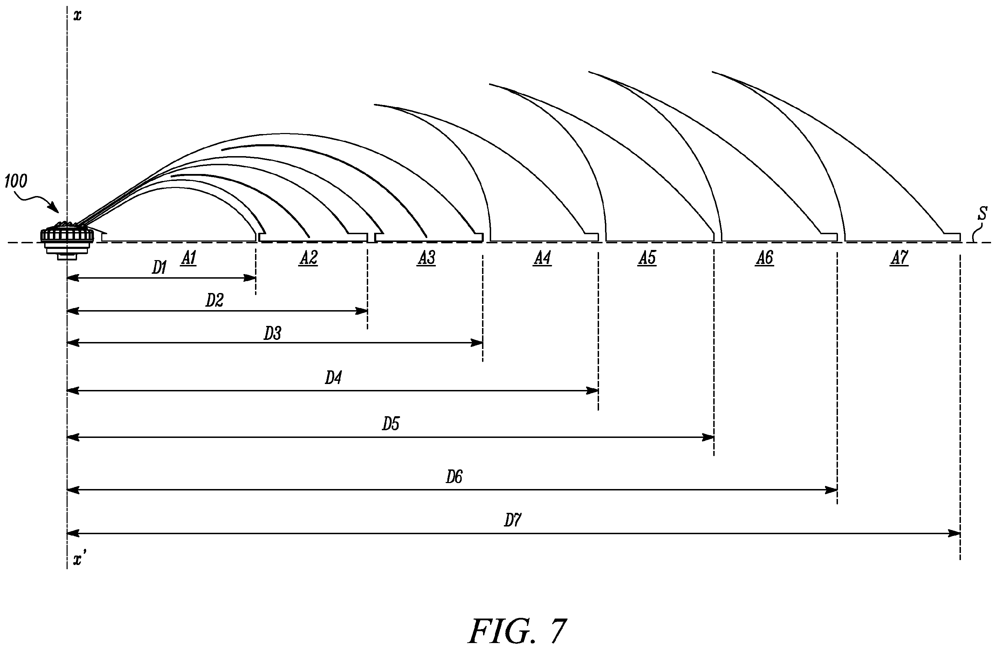

In some embodiments, an angle **α** of the plurality of nozzles **119** as shown in **FIG. 7** may be adjustable with respect to the sprinkler head **118.** The angle adjustment of the plurality of nozzles **119** may improve or alter the sprinkling range, trajectory, or distances of the liquid stream on the irrigation field. Thus, more area on the irrigation field may be covered. In some embodiments, the angle **α** may be manually varied by the operator. In some embodiments, the angle **α** may be automatically varied by any means known in the art.

In some embodiments, the plurality of nozzles **119** may have similar cross-sections. The flow characteristics in these embodiments may be varied due to factors such as the interference of the liquid flow due to the at least one barrier **123** and distances between the outlet **110B** and the plurality of nozzles **119.**

Further, in some embodiments of the present disclosure, as shown in **FIGS. 5** and **6****,** the plurality of nozzles **119** have different cross-sections. The different cross-sections further alter the flow characteristics of the plurality of nozzles **119** in conjunction with the already discussed factors such as the interference of the liquid flow due to the at least one barrier **123** and distances between the outlet **110B** and the plurality of nozzles **119.** The cross-sections of the plurality of nozzles **119** refers to the cross-sections of the liquid flowing area within each of the plurality of nozzles **119.**

The nozzles **121, 122A** and **122B** have circular or oval or any similar shaped cross-section. The nozzles **121, 122A** and **122B** are thus well suited for providing desired liquid distribution at long distance or wide throw distance. The distance may be of the scale of 1.5 meters or more relative to the central axis **Y-Y'.** Further, the nozzles **122C, 122D, 122E** and **122F** have drop-shaped cross-section. The drop-shape may be referred to a cone with a hemispherical base. In particular with this application, the droplet shape of the nozzle cross-section implies that the section opening is narrowing at its one end while it forms an approximate circular contour on its other end. The nozzles **122C, 122D, 122E** and **122F** with drop-shaped cross-section are well suited for providing desired liquid distribution at narrow or shorter throw distances. The distance may be of the scale of 1.5 meters and less relative to the central axis **Y-Y'**.

However, in actual implementation of the present disclosure, the plurality of nozzles **119** may have other differently shaped cross-sections. The cross-sections of each of the plurality of nozzles **119** may be different with respect to each other. The cross-section of the plurality of the nozzles **119** may be different to provide different liquid streams having different profiles, ranges, and the like.

**FIG. 7** shows an illustration of the sprinkler system **100** sprinkling liquid at different distances ("D1", "D2", "D3", "D4", "D5", "D6" and "D7") relative to the central axis **Y-Y'** on the ground surface "S". The distance is such that "D7" > "D6" > "D5" > "D4" > "D3" > "D2" > "D1". The distances "D1", "D2", "D3", "D4", "D5", "D6", and "D7" corresponds to areas "A1", "A2", "A3", "A4", "A5", "A6" and "A7" respectively. The nozzles **121, 122A, 122B, 122C, 122D, 122E** and **122F** based on already discussed factors such as the interaction of liquid with the at least one barrier **123,** travelling distance and cross-section areas corresponds to throw distances "D7", "D6", "D5", "D4", "D3", "D2", "D1" and simultaneously areas "A7", "A6", "A5", "A4", "A3", "A2" and "Al".

Thus, the sprinkler system **100** of the present disclosure advantageously includes the at least one barrier **123** such that the at least one barrier **123** decreases the pressure or the energy of the liquid flowing towards the at least one second nozzle **122.** Further, the at least one barrier **123** also reduces the flow rate of the liquid flowing towards and from the at least one second nozzle **122.** The flow of the liquid flowing out of the at least second nozzle **122** thus varies in flow characteristics (say the flow rate, flow pressure, flow range etc.) relative to the liquid flowing out of the first nozzle **121.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

**100** Sprinkler System
**109** Side Surface
**109A** Inner Wall
**109B** Outer Wall
**110** Body
**110A** Inlet
**110B** Outlet
**111** Top Surface
**111A** Inner Wall
**111B** Outer Wall
**112** Liquid Channel
**112A** Inlet
**113** Bottom End
**114** Side Wall
**115** Annular Bracket
**116** Annular Recess
**117** Annular Step Portion
**118** Sprinkler Head
**118A** Annular Leg Portion
**118B** Annular Protrusion
**119** Nozzles
**120** Housing
**121** First Nozzle
**122** Second Nozzle
**123** Barrier
**124** First Barrier
**125** Second Barrier
**S** Ground
**X-X'** Axis
**Y-Y'** Central Axis
**D1** Lateral Distance
**D2** Lateral Distance
**A, B, C, D, E, F** Lateral Distance
**α** Angle
**D1, D2, D3, D4, D5, D6, D7** Distance
**A1, A2, A3, A4, A5, A6, A7** Area

## Claims

1. A sprinkler system **(100)** comprising:
a body **(110)** defining a liquid channel **(112),** wherein the liquid channel **(112)** is defined between an inlet **(110A)** and an outlet **(110B)** of the body **(110)** to allow flow of a liquid;
a sprinkler head **(118)** coupled to the body **(110);**
a plurality of nozzles **(119)** disposed with the sprinkler head **(118),** wherein the plurality of nozzles **(119)** defines a first nozzle **(121)** and at least one second nozzle **(122);**
**characterized in that:**
the body **(110)** further defines at least one barrier **(123),** and comprises a top surface **(111),**
wherein the at least one barrier **(123)** is coupled to the body **(110)** between the top surface **(111)** of the body **(110)** and the plurality of nozzles **(119),**
wherein the at least one barrier **(123)** is configured to at least partially limit the flow of liquid from the outlet **(110B)** towards the at least one second nozzle **(122),** and
wherein the at least one barrier **(123)** is further configured to interfere with the flow of liquid from the outlet **(110B)** such that the flow of the liquid flowing out of the at least one second nozzle **(122)** varies in flow characteristics relative to the liquid flowing out of the first nozzle **(121).**

2. The sprinkling system **(100)** of claim 1, wherein the at least one barrier **(123)** includes at least one first barrier **(124)** and at least one second barrier **(125).**

3. The sprinkling system **(100)** of claim 2, wherein the at least one first barrier **(124)** is cylindrical in shape and at least one second barrier **(125)** is arc-like in shape.

4. The sprinkling system **(100)** of claim 1, wherein the liquid channel **(112)** is defined along an axis **(X-X').**

5. The sprinkling system **(100)** of claim 4, wherein a lateral distance of the at least one barrier **(123)** from the axis **(X-X')** is greater than a lateral distance of the at least one second nozzle **(122)** from the axis **(X-X').**

6. The sprinkling system **(100)** of claims 4-5, wherein the lateral distance of the at least one barrier **(123)** from the axis **(X-X')** is less than a lateral distance **(D2)** of the first nozzle **(121)** from the axis **(X-X').**

7. The sprinkling system **(100)** of claims 4-6, wherein the outlet **(110B)** is offset from the axis **(X-X')** by a distance **(D1)** equal to or more than the lateral distance **(D2)** of the first nozzle **(121)** from the axis **(X-X').**

8. The sprinkling system **(100)** of any of the preceding claims, wherein an angle **(α)** of the plurality of nozzles **(119)** is adjustable with respect to the sprinkler head **(118).**

9. The sprinkling system **(100)** of any of the preceding claims, wherein the plurality of nozzles **(119)** have similar cross-sections.

10. The sprinkling system **(100)** of any of the preceding claims, wherein the plurality of nozzles **(119)** have different cross-sections.

## Patentansprüche

1. Beregnersystem (100), umfassend:
einen Körper **(110),** der einen Flüssigkeitskanal **(112)** definiert, wobei der Flüssigkeitskanal **(112)** zwischen einem Einlass **(110A)** und einem Auslass **(110B)** des Körpers **(110)** definiert ist, um einen Fluss einer Flüssigkeit zu ermöglichen;
einen Beregnerkopf **(118),** der mit dem Körper **(110)** gekoppelt ist;
eine Vielzahl von Düsen **(119),** die mit dem Beregnerkopf **(118)** angeordnet sind,
wobei die Vielzahl von Düsen **(119)** eine erste Düse **(121)** und mindestens eine zweite Düse **(122)** definiert;
**dadurch gekennzeichnet, dass:**
der Körper **(110)** ferner mindestens eine Barriere **(123)** definiert und eine obere Fläche **(111)** umfasst,
wobei die mindestens eine Barriere **(123)** schwenkbar mit dem Körper **(110)** zwischen der oberen Fläche **(111)** des Körpers **(110)** und der Vielzahl von Düsen **(119)** gekoppelt ist,
wobei die mindestens eine Barriere **(123)** konfiguriert ist, um den Fluss von Flüssigkeit aus dem Auslass **(110B)** zu der mindestens einen zweiten Düse **(122)** mindestens teilweise zu begrenzen, und
wobei die mindestens eine Barriere **(123)** ferner konfiguriert ist, um den Fluss von Flüssigkeit aus dem Auslass **(110B)** zu stören, so dass der Fluss der Flüssigkeit, die aus der mindestens einen zweiten Düse **(122)** herausfließt, sich in den Flusseigenschaften relativ zu der Flüssigkeit, die aus der ersten Düse **(121)** herausfließt, unterscheidet.

2. Beregnungssystem **(100)** nach Anspruch 1, wobei die mindestens eine Barriere **(123)** mindestens eine erste Barriere **(124)** und mindestens eine zweite Barriere **(125)** einschließt.

3. Beregnungssystem **(100)** nach Anspruch 2, wobei die mindestens eine erste Barriere **(124)** zylindrisch geformt ist und mindestens eine zweite Barriere **(125)** bogenartig geformt ist.

4. Beregnungssystem **(100)** nach Anspruch 1, wobei der Flüssigkeitskanal **(112)** entlang einer Achse **(X-X')** definiert ist.

5. Beregnungssystem **(100)** nach Anspruch 4, wobei ein seitlicher Abstand der mindestens einen Barriere **(123)** von der Achse **(X-X')** größer ist als ein seitlicher Abstand der mindestens einen zweiten Düse **(122)** von der Achse **(X-X').**

6. Beregnungssystem **(100)** nach den Ansprüchen 4 bis 5, wobei der seitliche Abstand der mindestens einen Barriere **(123)** von der Achse **(X-X')** geringer ist als ein seitlicher Abstand **(D2)** der ersten Düse **(121)** von der Achse **(X-X').**

7. Beregnungssystem **(100)** nach den Ansprüchen 4 bis 6, wobei der Auslass **(110B)** von der Achse **(X-X')** um einem Abstand **(D1)** versetzt ist, der gleich oder größer als der seitliche Abstand **(D2)** der ersten Düse **(121)** von der Achse **(X-X')** ist.

8. Beregnungssystem **(100)** nach einem der vorstehenden Ansprüche, wobei ein Winkel **(α)** der Vielzahl von Düsen **(119)** in Bezug auf den Beregnerkopf **(118)** einstellbar ist.

9. Beregnungssystem **(100)** nach einem der vorstehenden Ansprüche, wobei die Vielzahl von Düsen **(119)** ähnliche Querschnitte aufweist.

10. Beregnungssystem **(100)** nach einem der vorstehenden Ansprüche, wobei die Vielzahl von Düsen **(119)** unterschiedliche Querschnitte aufweist.

## Revendications

1. Système d'extincteur **(100)** comprenant :
un corps **(110)** définissant un canal de liquide **(112),** dans lequel le canal de liquide **(112)** est défini entre une entrée **(110A)** et une sortie **(110B)** du corps **(110)** pour permettre l'écoulement d'un liquide ;
une tête d'extincteur **(118)** accouplée au corps **(110)** ;
une pluralité de buses **(119)** disposées avec la tête d'extincteur **(118),**
dans lequel la pluralité de buses **(119)** définit une première buse **(121)** et au moins une seconde buse **(122)** ;
**caractérisé en ce que :**
le corps **(110)** définit en outre au moins une barrière **(123),** et comprend une surface supérieure **(111),**
dans lequel l'au moins une barrière **(123)** est accouplée au corps **(110)** entre la surface supérieure **(111)** du corps **(110)** et la pluralité de buses **(119),**
dans lequel l'au moins une barrière **(123)** est conçue pour limiter au moins partiellement l'écoulement de liquide depuis la sortie **(110B)** vers l'au moins une seconde buse **(122),** et
dans lequel l'au moins une barrière **(123)** est en outre conçue pour interférer avec l'écoulement de liquide depuis la sortie **(110B)** de telle sorte que l'écoulement du liquide s'écoulant de l'au moins une seconde buse **(122)** varie dans les caractéristiques d'écoulement par rapport au liquide s'écoulant de la première buse **(121).**

2. Système d'extincteur **(100)** selon la revendication 1, dans lequel l'au moins une barrière **(123)** comporte au moins une première barrière **(124)** et au moins une seconde barrière **(125).**

3. Système d'extincteur **(100)** selon la revendication 2, dans lequel l'au moins une première barrière **(124)** est de forme cylindrique et au moins une seconde barrière **(125)** est de forme en arc.

4. Système d'extincteur **(100)** selon la revendication 1, dans lequel le canal de liquide **(112)** est défini le long d'un axe **(X-X').**

5. Système d'extincteur **(100)** selon la revendication 4, dans lequel une distance latérale de l'au moins une barrière **(123)** par rapport à l'axe **(X-X')** est supérieure à une distance latérale de l'au moins une seconde buse **(122)** par rapport à l'axe **(X-X').**

6. Système d'extincteur **(100)** selon les revendications 4 à 5, dans lequel la distance latérale de l'au moins une barrière **(123)** par rapport à l'axe **(X-X')** est inférieure à une distance latérale **(D2)** de la première buse **(121)** par rapport à l'axe **(X-X').**

7. Système d'extincteur **(100)** selon les revendications 4 à 6, dans lequel la sortie **(110B)** est décalée par rapport à l'axe **(X-X')** d'une distance **(D1)** égale ou supérieure à la distance latérale **(D2)** de la première buse **(121)** par rapport à l'axe **(X-X').**

8. Système d'extincteur **(100)** selon l'une quelconque des revendications précédentes, dans lequel un angle **(α)** de la pluralité de buses **(119)** est réglable par rapport à la tête d'extincteur **(118).**

9. Système d'extincteur **(100)** selon l'une quelconque des revendications précédentes, dans lequel la pluralité de buses **(119)** ont des sections transversales similaires.

10. Système d'extincteur **(100)** selon l'une quelconque des revendications précédentes, dans lequel la pluralité de buses **(119)** ont des sections transversales différentes.
